# EUROPEAN PATENT SPECIFICATION

(11) **EP 2 572 503 B1**
(45) Date of publication and mention of the grant of the patent: **31.12.2014**
(21) Application number: 11725492.0
(22) Date of filing: 20.05.2011
(51) Int. Cl.: H04H 20/63, H04N 21/214, H04N 21/61, H04N 7/10, H04N 7/20, H04N 21/654

(54) **SYSTEM FOR TRANSMISSION AND DISTRIBUTION OF BROASDCAST DIGITAL DATA**
SYSTEM ZUR ÜBERTRAGUNG UND VERTEILUNG VON DIGITALEN RUNDFUNKDATEN
SYSTÈME DE TRANSMISSION ET DE DISTRIBUTION DE DONNÉES NUMÉRIQUES DE DIFFUSION

(30) Priority: 21.05.2010 GB 201008478
(43) Date of publication of application: 27.03.2013
(73) Proprietor: Global Invacom Ltd., Stevenage, Hertfordshire SG1 2UG (GB)
(72) Inventor: STAFFORD, Gary, Stevenage Hertfordshire SG1 2UG (GB)
(74) Representative: Wood, Graham
(86) International application number: PCT/GB2011/050958
(87) International publication number: WO 2011/144943

(56) References cited:
- WO-A1-01/56297
- WO-A1-2004/082291
- WO-A2-2007/096617
- FR-A1- 2 854 015
- US-A1- 2009 232 077
- INVACOM: 'GI Fibre MDU', [Online] 01 May 2010, XP055107313 Retrieved from the Internet: <URL:http: http://web.archive.org/web/20100501152855/h ttp://www.globalinvacom.com/products/fibreo pticlnb2.php> [retrieved on 2014-03-12]

## Description

The invention to which this application relates is a system which allows digital data, typically that which is representative of television and/or radio channels, to be broadcast from one or a plurality of locations and then transmitted via the system to a plurality of receiving locations at which the data can be processed and the television and/or radio channels then be available for selection by users at their location.

Although the present invention will be described principally with regard to broadcast systems which utilise one or more satellites to which the digital data is transmitted and then relayed to the receiving locations, it should be appreciated that one or more features of the system of the invention, could be utilised in other broadcast systems such as cable or terrestrial broadcast systems.

Conventionally, data transmitted via the satellite transmitted digital data systems, are received at each of the receiving locations by an antenna which includes a dish which is oriented to collect the digital data which is broadcast from the appropriate satellite or satellites, and at least one low noise block (LNB) is provided to process the received data which is then carried from the antenna at the receiving location, to at least one broadcast data receiver, also referred to as a set top box. The digital data is transmitted to the set top box in an RF mode and at the set top box, at least one tuner is provided and other decoding means are provided to decode and process the received digital data into a format to allow generation of user selected television and/or radio channels.

A number of set top boxes may be provided within the same receiving location which can mean that each of the set top boxes includes at least one tuner and the same are desired to be positioned within the location at different points i.e. in different rooms. This can lead to the provision of a number of set top boxes and the need for additional cabling to be provided between the set top boxes so as to allow each set top box to receive the broadcast data.

The problem of the provision of a plurality of set top boxes is exacerbated when the receiving location is a building including multiple dwelling units, rather than a single home or dwelling unit such as, for example, a block of apartments. Conventionally, each of the apartments would be required to have a satellite antenna, an LNB and their own cabling system. The same is also a problem with regard to multiple dwelling units when the receiving location is in the form of a housing estate or town wherein once again, each premises is required to have its own set top box, satellite antenna and so on.

The applicant has identified this problem and in their own copending previous application EP1987611, have identified means whereby a single receiving antenna and LNB can be provided to receive the appropriate broadcast data signals and, from the LNB, the signals can be passed to means for converting the RF data signals into an optical format suitable to be carried along an optical fibre network. The optical fibre network is then linked to each of the receiving locations whereupon at each receiving location, the signal is reformatted into an RF mode so that the data signals can be presented to the set top box at each of the receiving locations in a conventional mode. The conversion of the digital data into an optical form means that a single satellite antenna and LNB can be located and provided for use to receive and process digital data which can be used by a plurality of dweller units within a block of apartments or in a village or town. This therefore greatly reduces the amount of receiving apparatus which is required to be provided while ensuring that all the television and radio channels, and typically digital radio and terrestrial television signals, are available for selection by each of the users in the dwelling units.

While this system offers a significant advantage in operation, there is still a need to provide one or a plurality of set top boxes at each of the receiving locations even though the same may be fed by a common antenna and distribution system. The set top boxes take up space within the receiving locations and, if a number of set top boxes are provided at various points within the receiving location, significant additional cabling is required to be used. Documents FR2854015, WO20040082291 and WO0156297 all disclose data distribution systems to allow data to be distributed to a number of points-within a receiving location but in each case at least one broadcast data receiver, typically of a conventional form, is required to be provided at at least one point in the receiving location to receive the data from the receiving means and process the same and the data is then distributed to other points in the receiving location from the broadcast data receiver.

The aim of the present invention is therefore to provide a data transmission system which allows the received digital data to be processed and transmitted to a receiving location and for the same to be processed and provided for selection by the user at points in the receiving location in a more efficient manner.

In a first aspect of the invention, there is provided apparatus for the receipt and distribution of transmitted digital data, said apparatus including data receiving means including at least one antenna and a low noise block, a distribution means to transfer received data signals to a plurality of points within at least one receiving location said distribution means located at the said at least one receiving location and with data connections to each of the said plurality of points, and data processing means, including a plurality of tuners, are located intermediate the data receiving means and the said plurality of points within the at least one receiving location and at each of said plurality of points there is provided a means to allow user interaction to make a selection to receive at least a portion of said received data signals to generate a user selected television or radio program and the low noise block includes means for converting the received data signals which are received in an RF format into an optical format and the data in the optical format is processed by the data processing means and transmitted to the distribution means at the said at least one receiving location in the optical format for distribution by the distribution means to the said plurality of points within the receiving location by an optical, Ethernet or wireless distribution system and characterised in that the: communication of data from the receiving location to the data processing means allows a user selection of a specific television or radio programme or auxiliary service to be passed to the data processing means, the appropriate data retrieved and made available to the user at the receiving location and/or passed for storage in a storage medium for subsequent retrieval.

In one embodiment the data is provided in an optical format from the receiving means to the at least one point at the receiving location.

In a further embodiment the data is carried via a wireless communication system such as Ethernet over wireless, or a similar wireless Local Area Network (LAN) at least from the data processing means to the at least one point.

In one embodiment, the data processing means are located downstream of the LNB. In one embodiment, the LNB includes means for converting the received data signals which are received in an RF mode, into the optical format whereupon the data in the optical format is processed and transmitted to the receiving location or locations.

In one embodiment, the at least one point within the receiving location to which the data signals are transmitted, is capable of distributing the data signals in an optical format or in another embodiment in a non-optical format, to further points within the receiving location.

Typically, the data signals at the points in the receiving location are then received at a monitor and/or speaker at said points to allow the generation of television and/or radio channels, with the data received at the points typically selected to be that which is required in order to generate a television or radio programme which has been selected by the user from a range of available television and/or radio programmes at the location of said point to be viewed and/or listened to. Typically the selection is made via selection means such as a control unit in the form of an electrical device which allows user interaction with the apparatus at the point.
In one embodiment, the distribution means within the receiving location, is an Ethernet distribution system. The system may, in one embodiment, already be installed within the premises.

In one embodiment, the data processing means are located at the receiving location such that the data signals received from the antenna and LNB, are sent to the same via an optical distribution system, and the data signals are then processed accordingly at the data processing means and then transmitted to the points.throughout the receiving location as required.

Typically the data which is received is provided as a series of transport streams with typically each of said transport streams including a plurality of video and/or audio data streams such as an MPEG format data streams, H.264 format data stream or other data stream format from which user selectable radio and/or television channels can be generated and from which, in turn, a user can select to view and/or listen to a television or radio programme.

It will therefore be appreciated that in accordance with this invention, there is no need for a conventional set top box to be provided at the receiving location as the provision of the data processing means at some stage between the receiving means and the distribution system for data signals within the receiving location, allows the data signals to be processed accordingly but does not necessarily require that the data signals be reformatted into an RF mode for processing.

In one embodiment there is provided a digital data transmission system, said digital data representing television and/or radio channels which are broadcast, said system including at least one receiving antenna for the data signals which are transmitted via satellite and an LNB, said data signals which are received via the LNB, converted into an optical format for processing and transmission and wherein the data remains in said optical format throughout the distribution thereof to one or more points at a receiving location.

In one embodiment, the data which is received via the at least one antenna of the LNB can be passed through a distribution system so as to make the same available to a plurality of points at a receiving location which are all then supplied with data from the common receiving means. In one embodiment, the data processing means are located intermediate the common receiving means and the display and/or speakers via which data is to be provided to the user. In one embodiment the data remains in an optical format or, alternatively, the data is carried in a non-optical format from the data processing means to the at least one point.

In one embodiment the distribution system allows the distribution of other services in addition to the television and radio channels, such as, high speed internet access, and/or VOIP. It can also support the provision of two way communication.

Specific embodiments of the invention will now be described with reference to the accompanying drawings; wherein
Figure 1a illustrates, in a schematic manner, the data transmission system in accordance with one embodiment of the invention;
Figure 1b illustrates, in a schematic manner, the data transmission system in accordance with a further embodiment of the invention; and
Figures 2a and b illustrate the system of the invention in detail in accordance with an embodiment of the invention.

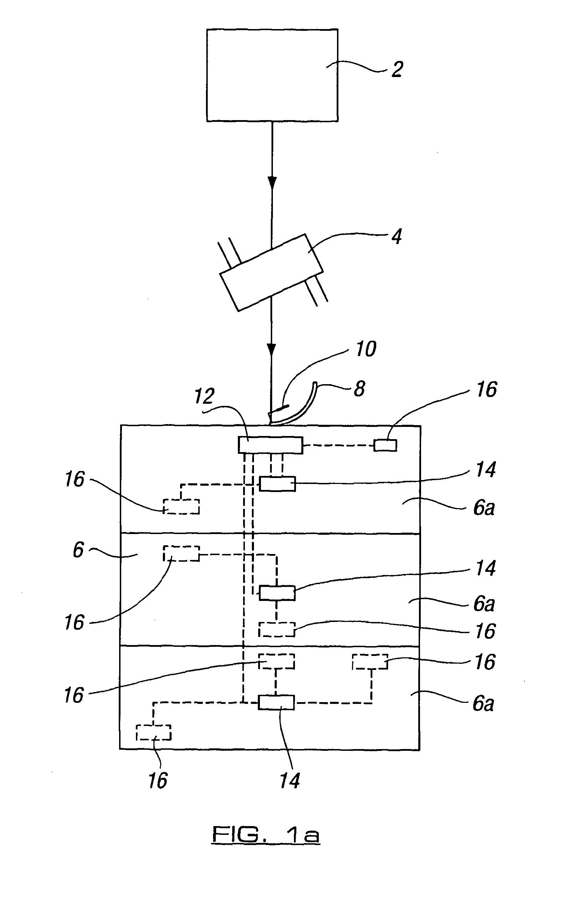

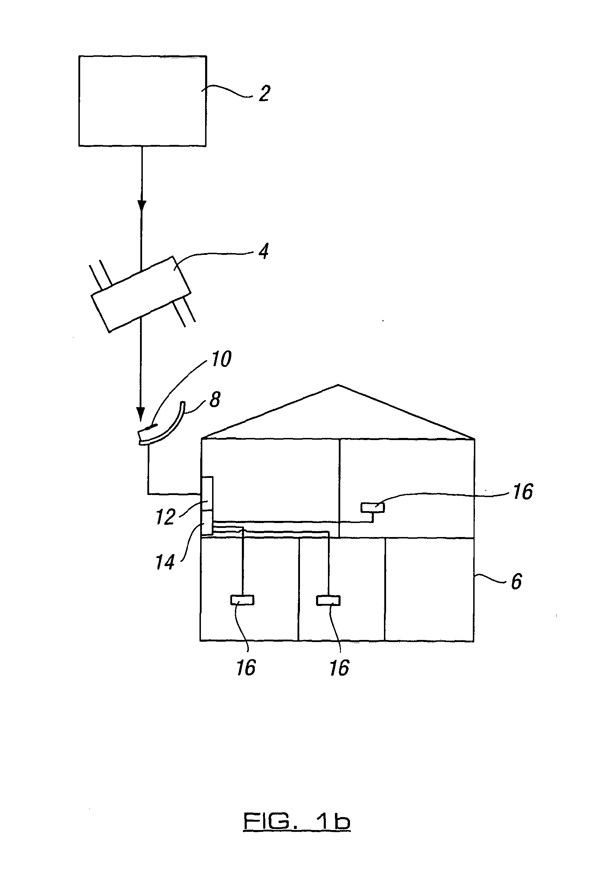

Referring firstly to Figures 1a and b, there is illustrated embodiments of a digital data broadcast system in accordance with the invention in which there is provided a broadcast or headend location 2 from which digital data is broadcast. It should be appreciated that the data which is broadcast can be provided from a plurality of locations although only one is shown here for ease of illustration. The data which is broadcast is transmitted to at least one satellite 4 which serves to collect and transmit onwardly the digital data to one or more receiving locations, one of which, 6, is shown in Figure 1a in which the receiving location 6 comprises multiple dwelling units 6a which may, for example, be provided within a block of apartments. In Figure 1b a single receiving location 6 is illustrated in which there are provided a series of rooms 6a.

In Figure 1a the distribution system may be used to distribute the received data signals from the receiving means antenna 8 and LNB 10 at the receiving location 6, to each of the dwelling units 6a so as to allow all of the data to be available at each of the dwelling units 6a for selection and the generation of television or radio channels via display means or speakers provided at a plurality of points or locations 16 within each of the units, with the said points selected by the user and typically at each point there is provided a television and/or radio. An optical and/or non-optical data signal distribution format may be used for at least part of the data distribution system. In Figure 1b the distribution system is used to distribute data to selected points 16 within the premises 6.

In accordance with the invention, the provision of a conventional data processing apparatus such as a set top box in each of the dwelling units, 6, 6a is rendered unnecessary by the provision of data processing means 12 which are located intermediate the receiving means 8, 10 and the points 16 at which display means and/or speakers in the receiving location units 6, 6a are provided. Furthermore, the data processing means can be provided to process data in an optical format if it is received in that format and therefore does not require the data to be reformatted back to an RF mode for processing, as would conventionally be the case.

At each of the receiving location dwelling units 6a, 6, there is provided an Ethernet or other form of distribution system including module 14. In one embodiment, as shown, the distribution system allows the optical or non-optical format data signals which are received to be distributed to the user selected points 16 within the receiving location dwelling units 6, 6a and be available for generation on the display means or speakers located at those points as appropriate and in response to the user selection made for television and/or radio programming at the respective points. It should be appreciated that the television or radio programming selected by users at the respective points may differ from point to point and the required data signals for each of the selections can be sent to and utilised at each of the points. Alternatively, the data can be distributed to the points 16 from the data processing means 12 in a non-optical format using CAT5 Ethernet or similar cables or via a wireless transmission system.

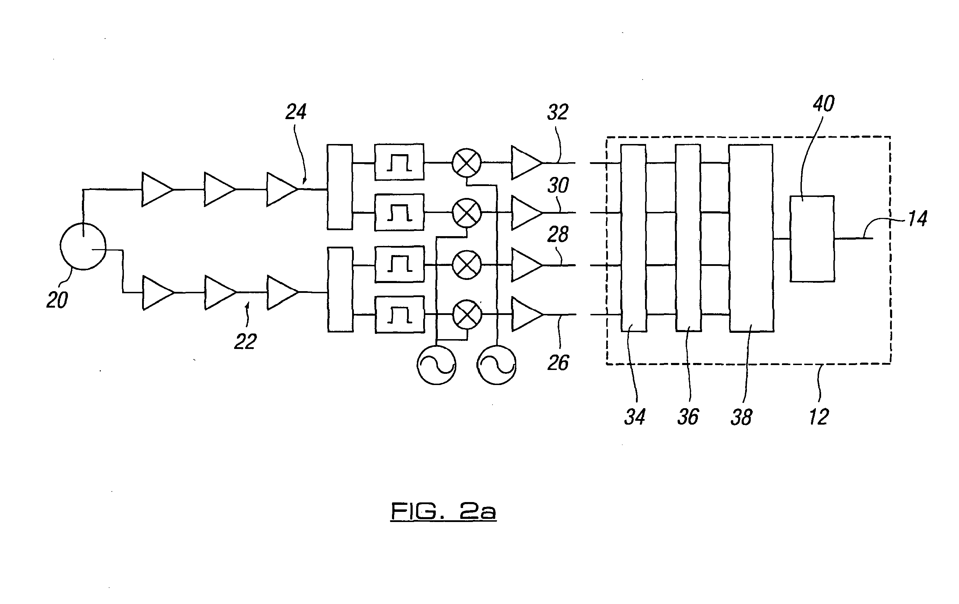

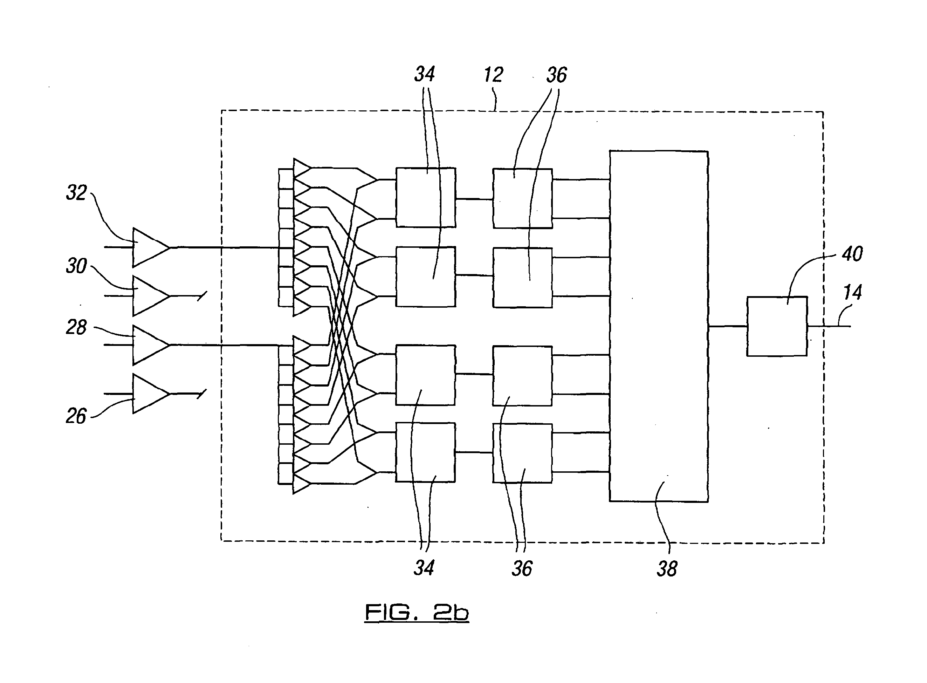

Turning now to Figures 2a and b, there is illustrated a more specific form of the invention in accordance with one embodiment. In Figure 2a, there is illustrated the apparatus which is provided downstream of the LNB 10 of the receiving means and which includes a waveguide 20, a processing system for the orthogonal components 22, 24, of the received data signals in order to generate four feeds; 26 - High Band horizontal; 28 - Whole Band horizontal; 30 - High Band vertical and 32 - Whole Band vertical. The data processing means 12 are provided in the module shown which includes tuners 34, demodulator 36, a data stream combiner 38, and Ethernet PHY receiver chip 40. The data processing means 12 can be provided downstream from the receiving means, 8,10, and preferably remotely from the LNB, in order to avoid any operational temperature issues. In one embodiment when the system is sued for a single receiving location the data processing means 12 are located within the single premises 6a and connected to the module 14 therein. Alternatively, if the receiving locations are a series of dwelling units 6a in an apartment block or a housing estate the data processing means 12 may be provided at a centralised location intermediate the receiving means and the modules 14 for each of the premises 6a.

Typically the data processing means 12 will include a plurality of tuners as are deemed to be required to ensure or allow the opportunity for the users in each of the receiving locations 6a and/or at each of the points in a receiving location are able to select to watch a particular programme and there will be a tuner available to respond and tune to obtain the data from the data streams which is required to generate the selected programme and for that data to then be transmitted to the location 6a from which the request was made and then subsequently be distributed via module 14 to point 16 within the premises from which the selection was made.. It will therefore be appreciated that a selection signal will be passed from the receiving locations 6a to the data processing means which is indicative of the user selection made and the appropriate data which is required can then be obtained and transmitted. The selection signal is carried along the distribution system but in the reverse direction to that of the data signals for the data fro the programming. In one embodiment sufficient tuners will be provided in order to allow a recording function to be provided for each of the receiving locations such that in addition or instead of the selection signal representing programming which is to be watched at that time, the selection signal may represent data which is to be recorded in a storage medium and then be available to the user from the specific receiving location at a later date. In one embodiment the storage medium is located at the data processing means for each premises or alternatively is provided as part of the apparatus at each receiving location. In a further embodiment the data processing means can be connected to existing or conventional set top boxes at the output therefrom in order to utilise the tuners and/or storage medium provided therewith.

In one embodiment terrestrial broadcast services can be fed into the data processing means such that these services are also made available to the receiving locations.

At each of the points 16 a means is provided or utilised to allow the user interaction with the distribution system. This means could for example, be the television set itself or a PC, using a Windows or DLNA communication means, an IPAD or any device which can be controlled to generate a selection signal indicative of programming to be viewed or stored. Other means include a programme guide interaction system and device which includes the "backend" of the set top box and which therefore allows some form of processing of the received data such as decoding of the received data at the point 16 in order to render the same available to be viewed or listened to rather than simply receiving the data in an already fully processed format which is the other option.

The Figures 2a and b therefore illustrate how the data processing means 12 can be used and provided to supply the data distribution module 14 which is used at each receiving location, in this case the series of premises 6a, to supply the distribution system within each of the premises 6a and thereby allow the data signals to be carried along the distribution system, such as an Ethernet distribution system, to each of the points 16 in the unit 6a at which the data is required to be available for generation of television and/or radio. The data signals may be carried from module 14 to the points 16 in an optical or non-optical format as can be selected at the time of designing the system. At the points 16 there may be provided a means to allow user interaction with the system. The user interaction is typically of a form to allow a particular television or radio or auxiliary service, such as a television guide or EPG to be generated from the data which is received at the data processing means 12 and distributed onwardly therefrom.

Once the data has passed through the data processing means 12 it is supplied to the modules 14 in each of the dwelling units 6a for any subsequent processing and remains in the format for onward distribution therefrom.

At the receiving means 8,10 the data signals can be processed into an optical format and retained in that format as the data is subsequently supplied from module 14 to each of the points 16 within units 6a. The data is therefore retained in the optical format as it is distributed to the points 16 in each of the dwelling units 6a. Alternatively from the receiving means 8, 10, the data signals can be carried to the data processing means 12 in a non-optical format using co-axial or similar cable and to the module 14 and, after the module 14, is distributed in an optical or non-optical format. Thus the format or combination of formats in which the data signals are carried to and from the data processing means can be selected to suit particular installation requirements

Thus the following are representative of the possible format combinations which can be used to transmit the data signals in accordance with the invention.

| Receiving means to Data processing means to Point | | |
|---|---|---|
| 1. | non-optical | non-optical |
| 2 | non-optical | optical |
| 3. | optical | optical |
| 4 | optical | non-optical |
| 5 | non-optical | wireless |
| 6 | optical | wireless |

Typically when the optical format is used this is achieved by using fibre optic cabling or plastic fibre cabling as appropriate.

## Claims

1. Apparatus for the receipt and distribution of transmitted digital data, said apparatus including data receiving means including at least one antenna (8) and a low noise block (10), a distribution means to transfer received data signals to a plurality of points within at least one receiving location (6) said distribution means located at the said at least one receiving location and with data connections to each of the said plurality of points (16), and data processing means (12), including a plurality of tuners (34), are located intermediate the data receiving means and the said plurality of points (16) within the at least one receiving location (6) and at each of said plurality of points (16) there is provided a means to allow user interaction to make a selection to receive at least a portion of said received data signals to generate a user selected television or radio program and the low noise block (10) includes means for converting the received data signals which are received in an RF format into an optical format and the data in the optical format is processed by the data processing means (12) and transmitted to the distribution means at the said at least one receiving location (6) in the optical format for distribution by the distribution means to the said plurality of points (16) within the receiving location (6) by an optical, Ethernet or wireless distribution system and **characterised in that** the communication of data from the receiving location to the data processing means allows a user selection of a specific television or radio programme or auxiliary service to be passed to the data processing means, the appropriate data retrieved and made available to the user at the receiving location and/or passed for storage in a storage medium for subsequent retrieval.

2. Apparatus according to claim 1 wherein the data is provided in an optical format from the receiving means to the at least one point at the receiving location.

3. Apparatus according to claim 1 wherein the data is carried by an Ethernet cable between the data processing means and the said plurality of points.

4. Apparatus according to claim 1 wherein at least one of the points within the receiving location to which the data signals are transmitted, is capable of distributing the data signals in an optical format or in a non-optical format, to further points within the receiving location.

5. Apparatus according to claim 1 wherein the data processing means are located at the receiving location and the data signals received from the antenna and LNB are sent to the data processing means via an optical fibre, said data signals processed at the data processing means and then transmitted to a plurality of points at the receiving location.

6. Apparatus according to claim 1 wherein the data which is received via the at least one antenna of the LNB is passed to make the same available to a plurality of points at a receiving location which are all then supplied with data from the common receiving means.

7. A system according to claim 1 wherein the distribution system allows the distribution of services in addition to the television and radio channels including either or both of high speed internet access, and/or VOIP.

## Patentansprüche

1. Vorrichtung für den Empfang und die Verteilung von übertragenen digitalen Daten, wobei die genannte Vorrichtung Folgendes beinhaltet: eine Datenempfangseinrichtung, die wenigstens eine Antenne (8) und einen rauscharmen Signalumsetzer (LNB) (10) beinhaltet, eine Verteilungseinrichtung zum Übertragen der empfangenen Datensignale an mehrere Punkte innerhalb wenigstens eines Empfangsorts (6), wobei die genannte Verteilungseinrichtung sich an dem genannten wenigstens einen Empfangsort befindet, und mit Datenverbindungen zu jedem der genannten mehreren Punkte (16) und eine Datenverarbeitungseinrichtung (12) einschließlich mehrerer Tuner (34), die zwischen der Datenempfangseinrichtung und den genannten mehreren Punkten (16) innerhalb des wenigstens einen Empfangsortes (6) liegt, und wobei an jedem der genannten mehreren Punkte (16) ein Mittel vorgesehen ist, um die Benutzerinteraktion zum Tätigen einer Auswahl zum Empfangen von wenigstens einem Teil der genannten empfangenen Datensignale zum Erzeugen einer benutzergewählten Fernseh- oder Radiosendung zuzulassen, und der rauscharme Signalumsetzer (10) ein Mittel zum Umsetzen der empfangenen Datensignale, die in einem HF-Format empfangen werden, in ein optisches Format beinhaltet und die Daten in dem optischen Format von der Datenverarbeitungseinrichtung (12) verarbeitet werden und von der Verteilungseinrichtung an dem genannten wenigstens einen Empfangsort (6) in dem optischen Format zur Verteilung durch die Verteilungseinrichtung an die genannten mehreren Punkte (16) innerhalb des Empfangsortes (6) durch ein optisches, Ethernetoder drahtloses Verteilungssystem übertragen werden, und **dadurch gekennzeichnet, dass** die Datenkommunikation von dem Empfangsort zu der Datenverarbeitungseinrichtung zulässt, dass eine Benutzerauswahl einer spezifischen Fernseh- oder Radiosendung oder eines Hilfsdienstes zu der Datenverarbeitungseinrichtung weitergeleitet wird, die zutreffenden Daten abgerufen werden und dem Benutzer an dem Empfangsort verfügbar gemacht werden und/oder zur Speicherung in einem Speichermedium zum nachfolgenden Abrufen weitergeleitet werden.

2. Vorrichtung nach Anspruch 1, wobei die Daten von der Empfangseinrichtung dem wenigstens einen Punkt an dem Empfangsort in einem optischen Format bereitgestellt werden.

3. Vorrichtung nach Anspruch 1, wobei die Daten von einem Ethernetkabel zwischen der Datenverarbeitungseinrichtung und den genannten mehreren Punkten getragen werden.

4. Vorrichtung nach Anspruch 1, wobei wenigstens einer der Punkte innerhalb des Empfangsortes, zu dem die Datensignale übertragen werden, in der Lage ist, die Datensignale in einem optischen Format oder in einem nichtoptischen Format an weitere Punkte innerhalb des Empfangsortes zu verteilen.

5. Vorrichtung nach Anspruch 1, wobei die Datenverarbeitungseinrichtung sich an dem Empfangsort befindet und die von der Antenne und dem LNB empfangenen Datensignale über einen Lichtwellenleiter an die Datenverarbeitungseinrichtung gesendet werden, wobei die genannten Datensignale an der Datenverarbeitungsrichtung verarbeitet und dann an mehrere Punkte an dem Empfangsort übertragen werden.

6. Vorrichtung nach Anspruch 1, wobei die über die wenigstens eine Antenne des LNB empfangenen Daten weitergeleitet werden, um dieselben für mehrere Punkte an einem Empfangsort verfügbar zu machen, denen allen dann Daten von der gemeinsamen Empfangseinrichtung zugeführt werden.

7. System nach Anspruch 1, wobei das Verteilungssystem die Verteilung von Diensten zusätzlich zu den Fernseh- und Radiokanälen, einschließlich von Hochgeschwindigkeits-Internetzugang und/oder VOIP, zulässt.

## Revendications

1. Appareil pour la réception et la distribution de données numériques transmises, ledit appareil incluant des moyens de réception de données comportant au moins une antenne (8) et un bloc à faible bruit (10), un moyen de distribution pour transférer des signaux de données reçus vers une pluralité de points à l'intérieur d'au moins un emplacement de réception (6), ledit moyen de distribution étant positionné au niveau dudit au moins un emplacement de réception, et avec des connexions de données vers chaque point parmi ladite pluralité de points (16), et des moyens de traitement de données (12), incluant une pluralité de syntoniseurs (24), étant positionnés entre les moyens de réception de données et ladite pluralité de points (16) à l'intérieur dudit au moins un emplacement de réception (6), et au niveau de chaque point parmi ladite pluralité de points (16) un moyen étant prévu pour permettre une interaction Utilisateur afin d'effectuer une sélection, de recevoir au moins une portion desdits signaux de données reçus pour générer un programme radio ou télévisé sélectionné par l'utilisateur, et le bloc à faible bruit (10) incluant des moyens pour convertir les signaux de données reçus, qui sont reçus dans un format RF, en un format optique et les données en format optique étant traitées par les moyens de traitement de données (12) et transmises au moyen de distribution au niveau dudit au moins un emplacement de réception (6) en format optique à des fins de distribution par le moyen de distribution vers ladite pluralité de points (16) à l'intérieur de l'emplacement de réception (6) grâce à un système de distribution optique, Ethernet ou sans fil, et **caractérisé en ce que** la communication de données en provenance de l'emplacement de réception vers les moyens de traitement de données permet de faire passer aux moyens de traitement de données une sélection Utilisateur d'un service auxiliaire ou d'un programme radio ou télévisé spécifique, alors que les données appropriées sont récupérées et mises à la disposition de l'utilisateur au niveau de l'emplacement de réception et/ou sont acheminées en vue d'un stockage dans un support de stockage en vue d'une récupération ultérieure.

2. Appareil selon la revendication 1, les données étant fournies en un format optique à partir des moyens de réception vers ledit au moins un point au niveau de l'emplacement de réception.

3. Appareil selon la revendication 1, les données étant transportées par un câble Ethernet entre les moyens de traitement de données et ladite pluralité de points.

4. Appareil selon la revendication 1, l'un au moins des points à l'intérieur de l'emplacement de réception, auquel les signaux de données sont transmis, étant apte à distribuer les signaux de données en un format optique ou en un format non optique, vers des points supplémentaires à l'intérieur de l'emplacement de réception.

5. Appareil selon la revendication 1, les moyens de traitement de données étant positionnés au niveau de l'emplacement de réception, et les signaux de données reçus en provenance de l'antenne et du LNB étant envoyés aux moyens de traitement de données via une fibre optique, lesdits signaux de données étant traités au niveau des moyens de traitement de données et étant ensuite transmis à une pluralité de points au niveau de l'emplacement de réception.

6. Appareil selon la revendication 1, les données qui sont reçues via ladite au moins une antenne du LNB étant communiquées afin de les rendre disponibles à une pluralité de points, au niveau d'un emplacement de réception, lesquels sont tous alimentés ensuite en données en provenance des moyens de réception communs.

7. Système selon la revendication 1, le système de distribution autorisant la distribution de services, en plus des canaux de radio et de télévision, incluant soit l'un soit les deux moyens suivants, à savoir l'accès haute vitesse à l'internet et/ou le mode VOIP.
